# EUROPÄISCHE PATENTSCHRIFT

(11) **EP 3 180 556 B1**
(45) Veröffentlichungstag und Bekanntmachung des Hinweises auf die Patenterteilung: **20.11.2019**
(21) Anmeldenummer: 15756358.6
(22) Anmeldetag: 04.08.2015
(51) Int. Cl.: F16L 55/07, F01P 11/02, F16K 31/524, F16K 31/528, F16K 31/44

(54) **LEITUNGSVERBINDER**
CONDUIT CONNECTOR
RACCORD DE CONDUITES

(30) Priorität: 13.08.2014 DE 102014111534
(43) Veröffentlichungstag der Anmeldung: 21.06.2017
(73) Patentinhaber: NORMA Germany GmbH, 63277 Maintal (DE)
(72) Erfinder: GOTTSCHALK, René, 63477 Maintal (DE); RIES, Annette, 63477 Maintal (DE); BAUER, Andreas, 63477 Maintal (DE)
(74) Vertreter: Patentanwälte Olbricht Buchhold Keulertz
(86) Internationale Anmeldenummer: PCT/EP2015/067979
(87) Internationale Veröffentlichungsnummer: WO 2016/023798

(56) Entgegenhaltungen:
- WO-A1-01/02283
- DE-A1-102010 015 157
- DE-B- 1 007 588
- DE-T2- 69 812 414
- FR-A5- 2 041 861
- GB-A- 2 448 418

## Beschreibung

Die Erfindung betrifft gemäß dem Oberbegriff des Anspruchs 1 einen Leitungsverbinder mit einem Gehäuse, das eine erste Anschlussgeometrie, die mit einer Fluidleitung verbindbar ist, und eine zweite Anschlussgeometrie, die mit einem Gegenelement verbindbar ist, aufweist, wobei die erste Anschlussgeometrie und die zweite Anschlussgeometrie durch einen Durchgangskanal im Gehäuse verbunden sind und das Gehäuse eine Auslassöffnung aufweist und ein Verschlusselement vorgesehen ist.

Ein derartiger Leitungsverbinder ist beispielsweise aus DE 10 2010 015 157 A1 bekannt.

Ein derartiger Leitungsverbinder wird vielfach in einem Flüssigkeitskreislauf eingesetzt, beispielsweise einem Kühlmittelkreislauf eines Kraftfahrzeugs.

Wenn das Kühlmittel gewechselt werden muss, wird üblicherweise der Leitungsverbinder vom Gegenelement gelöst, so dass der Kühlmittelkreislauf eine Öffnung erhält, durch die das Kühlmittel abfließen kann. Allerdings ist hierbei zu beobachten, dass der Kühlmittelabfluss nicht gezielt gesteuert werden kann, so dass der Monteur und/oder die Umgebung durch aus dem Kühlmittelkreislauf herausfließendes Kühlmittel verschmutzt wird.

Aus DE 698 12 414 T2 ist ein Leitungsverbinder bekannt, von dem mehrere Verteilerkanäle abgehen. In jedem dieser Verteilkanäle ist ein Stellventil mit einem verschlusselement angeordnet, mit dem die Durchflussmenge, die in den Verteilerkanal geleitet wird, einstellbar ist.

In GB 2 448 418 A wird ein Leitungsverbinder mit einem Kugelhahn beschrieben. Zusätzlich ist eine Ablassöffnung vorgesehen, die im regulären Betrieb mit einem Verschlusselement, nämlich einer Ablassschraube, verschlossen ist. Zum Ablassen von Fluid, kann die Ablassschraube herausgeschraubt und entnommen werden. Die Ablassschraube weist jedoch auch einen axial ausgerichteten und endseitig geschlossenen Ablasskanal auf. Bei einem Lösen der Ablassschraube umströmt das Fluid einen Dichtring der Ablassschraube und dringt durch radiale Löcher hinter der Dichtung in den Ablasskanal ein. Das Fluid wird dann durch die Ablassschraube hindurch abgelassen.

DE 10 2010 015 157 A offenbart ein Kupplungselement mit einem Hauptströmungskanal. Zusätzlich ist ein Entlüftungsventil vorgesehen, mit dem Luft aus dem Hauptströmungskanal abgelassen werden kann. Ein Verschlusselement des Entlüftungsventils öffnet bei einem Überdruck im Hauptströmungskanal, indem ein Ventilelement linear verschoben wird.

Der Erfindung liegt die Aufgabe zugrunde, die Wartungsfreundlichkeit von flüssigkeitsführenden Leitungssystemen zu verbessern. Außerdem soll das Verschlusselement in der geschlossenen Position zuverlässig festgehalten werden und sich nicht durch Vibrationen, wie sie beispielsweise in einem Kraftfahrzeug auftreten, aus der geschlossenen Position lösen.

Hauptmerkmale der Erfindung sind im Hauptanspruch 1 angegeben. Optionale Ausgestaltungen der Erfindung sind Gegenstand der Ansprüche 2 bis 13 sowie der Beschreibung.

Die Aufgabe wird durch einen Leitungsverbinder der eingangs genannten Art wobei das Verschlusselement in einer ersten Position festlegbar ist, in der eine Verbindung zwischen der Ausschlussöffnung und dem Durchgangskanal gesperrt ist, und das Verschlusselement in eine zweite Position verlagerbar ist, in der die Ausschlussöffnung mit dem Durchgangskanal verbunden ist, und wobei von den Teilen Verschlusselement und Gehäuse das eine mindestens einen schraubenlinienförmig geführten Steg und das andere eine Ausformung, die mit dem Steg zusammenwirkt, aufweist, dadurch gelöst, dass das Verschlusselement und das Gehäuse in der ersten Position eine Rastverbindung miteinander aufweisen.

Mit einer derartigen Ausbildung kann man in einem flüssigkeitsführenden Leitungssystem eine Möglichkeit bereitstellen, mit der man die Flüssigkeit aus dem Leitungssystem ablassen kann, ohne eine Verbindung zwischen dem Leitungsverbinder und dem Gegenelement oder der Fluidleitung lösen zu müssen. Diese Möglichkeit wird durch die Auslassöffnung zur Verfügung gestellt. Diese Auslassöffnung kann zuverlässig flüssigkeitsdicht verschlossen werden, weil das Verschlusselement in der ersten Position, in der es eine Verbindung zwischen der Auslassöffnung und dem Durchgangskanal sperrt, festlegbar ist. Aus dieser Position heraus kann sich das Verschlusselement also nur unter der Wirkung von von außen aufzubringenden Kräften lösen. Nach dem Lösen aus der ersten Position kann das Verschlusselement in die zweite Position verlagert werden, so dass die Flüssigkeit aus dem Leitungssystem abgelassen werden kann.

Erfindungsgemäß weist von den Teilen Verschlusselement und Gehäuse das eine mindestens einen schraubenlinienförmig geführten Steg und das andere eine Ausformung, die mit dem Steg zusammenwirkt, auf. Zwischen dem Verschlusselement und dem Gehäuse existiert also eine Art Schraubverbindung. Das Verschlusselement wird gegenüber dem Gehäuse gedreht und bewegt sich dadurch entlang seiner Rotationsachse aus der ersten Position in die zweite Position oder beim Verschließen der Auslassöffnung entsprechend umgekehrt von der zweiten Position in die erste Position.

Vorzugsweise weist das Verschlusselement eine Drehmomentangriffsfläche auf. Die Drehmomentangriffsfläche kann beispielsweise als Sechskant ausgebildet sein, an der ein Monteur mit einem entsprechenden Werkzeug angreifen kann, um das Verschlusselement zu drehen.

Hierbei ist bevorzugt, dass die Drehmomentangriffsfläche an einem Vorsprung angeordnet ist, der unabhängig von der Stellung des Verschlusselements im Gehäuse aus dem Gehäuse herausragt. Der Monteur kann also auch dann auf die Drehmomentangriffsfläche zugreifen, wenn sich das Verschlusselement in der ersten Position befindet.

Gemäß der Erfindung weisen das Verschlusselement und das Gehäuse in der ersten Position eine Rastverbindung miteinander auf. Das Verschlusselement wird in der ersten Position also zuverlässig festgehalten und kann sich nicht durch Vibrationen, wie sie beispielsweise in einem Kraftfahrzeug auftreten, aus der ersten Position lösen. Zum Lösen müssen vielmehr von außen Kräfte auf das Verschlusselement einwirken, die in der Lage sind, die Haltewirkung der Rastverbindung zu überwinden.

Hierbei ist besonders bevorzugt, dass die Rastverbindung in Rotationsrichtung wirkt. Wenn sich das Verschlusselement nicht drehen kann, weil die Rastverbindung in Rotationsrichtung wirkt, dann kann es sich auch nicht translatorisch entlang seiner Rotationsachse bewegen, weil hierzu wegen des schraubenlinienförmig geführten Stegs eine Drehbewegung erforderlich ist. Eine Rastverbindung in Rotationsrichtung kann relativ schwach dimensioniert sein, so dass beim Lösen der Rastverbindung oder beim Einrasten nicht übermäßig große Kräfte aufgebracht werden müssen.

Vorzugsweise weist das Verschlusselement einen Längskanal auf, der an einem Ende geschlossen ist. Dadurch wird die Masse des Verschlusselements klein gehalten.

Vorzugsweise ist das Verschlusselement in einem Verschlusselementkanal angeordnet, der eine Umfangswand aufweist, wobei das Verschlusselement eine Ringdichtung aufweist, die von innen an der Umfangswand anliegt. Die Ringdichtung kann beispielsweise als O-Ring ausgebildet sein. Sie sorgt für die Unterbrechung der Verbindung zwischen dem Durchgangskanal und der Auslassöffnung. Da sich die geometrischen Verhältnisse für die Ringdichtung bei der Bewegung des Verschlusselements im Verschlusselementkanal praktisch nicht ändern, kann die Ringdichtung auch nicht versehentlich überpresst werden.

Hierbei ist bevorzugt, dass die Auslassöffnung in den Ventilelementkanal mündet und eine parallel zur Längsachse des Ventilelementkanals verlaufende Brücke vorgesehen ist, die bündig mit der Umfangswand abschließt und die Auslassöffnung durchsetzt. Die Brücke dient als Anlagefläche für die Ringdichtung bei der Bewegung des Verschlusselements im Gehäuse aus der ersten Position in die zweite Position oder umgekehrt. Damit wird die Gefahr klein gehalten, dass die Ringdichtung beim Vorbeilaufen an der Auslassöffnung beschädigt wird.

Vorzugsweise liegt das Verschlusselement in der ersten Position mit einer Stufe an einer Anlagefläche außen am Gehäuse an. Die Anlagefläche und die Stufe begrenzen zusammen die Bewegung des Verschlusselements in das Gehäuse hinein.

Hierbei ist bevorzugt, dass die Anlagefläche von einer Ringwand umgeben ist. Damit wird die Gefahr einer Verschmutzung der Anlagefläche klein gehalten. Man kann daher mit einer großen Zuverlässigkeit die erste Position des Verschlusselements im Gehäuse wiederholt erreichen.

Bevorzugterweise weist der Verschlusselementkanal eine Endstirnwand auf und das Verschlusselement ragt mit einem Abschnitt durch eine Öffnung in der Endstirnwand hindurch, wobei der Abschnitt einen geringeren Querschnitt als eine größte Abmessung der Öffnung aufweist. Dementsprechend verbleibt zwischen dem Abschnitt und dem Umfangsrand der Öffnung eine Lücke, durch die die Flüssigkeit aus dem Durchgangskanal in die Ablassöffnung abfließen kann.

Hierbei ist bevorzugt, dass das Verschlusselement an seinem in das Gehäuse hineinragenden Ende eine Querschnittsvergrößerung aufweist, die größer ist als ein kleinster Durchmesser der Öffnung. Die Querschnittsvergrößerung bildet dann eine Verliersicherung, d.h. das Verschlusselement kann nicht ohne weiteres aus dem Gehäuse herausfallen oder herausgenommen werden.

Vorzugsweise ist das Gehäuse zumindest in einem Berührungsbereich mit dem Verschlusselement aus einem ersten Material und das Verschlusselement zumindest im Berührungsbereich aus einem zweiten Material gebildet, wobei das erste Material eine andere Härte als das zweite Material aufweist. Damit ist die Gefahr, dass das Verschlusselement und das Gehäuse sich gegenseitig beschädigen, klein gehalten.

In einer besonders bevorzugten Ausgestaltung ist vorgesehen, dass das Gehäuse einen Auslassstutzen aufweist, in den die Auslassöffnung mündet. Der Auslassstutzen kann zum einen die aus der Auslassöffnung herausfließende Flüssigkeit führen. Zum anderen kann der Auslassstutzen verwendet werden, um einen Schlauch anzubringen, durch den die Flüssigkeit aus dem flüssigkeitsführenden Leitungssystem abfließen kann, um sie beispielsweise gezielt in einen Auffangbehälter zu lenken.

Die Erfindung wird im Folgenden anhand eines bevorzugten Ausführungsbeispiels in Verbindung mit der Zeichnung beschrieben. Hierin zeigen:
- Fig. 1: eine schematische Schnittansicht eines Leitungsverbinders,
- Fig. 2: eine Ansicht A nach Fig. 1 im Ausschnitt,
- Fig. 3: einen Schnitt III-III nach Fig. 1 mit einem Verschlusselement in einer ersten Position,
- Fig. 4: eine Schnittansicht entsprechend Fig. 3 mit dem Verschlusselement in einer zweiten Position und
- Fig. 5: eine Ansicht B nach Fig. 1 ohne Verschlusselement.

Ein Leitungsverbinder 1 weist ein Gehäuse 2 auf, das eine erste Anschlussgeometrie 3 und eine zweite Anschlussgeometrie 4 aufweist. Die erste Anschlussgeometrie 3 dient üblicherweise zur Verbindung des Leitungsverbinders mit einer Fluidleitung, die hier nicht dargestellt ist. Die zweite Anschlussgeometrie 4 ist mit einem Gegenelement verbindbar. Hier ist ein Sicherungsbügel 5 vorgesehen, mit dem das Gegenelement in der zweiten Anschlussgeometrie 4 gesichert werden kann. Die erste Anschlussgeometrie 3 und die zweite Anschlussgeometrie 4 sind durch einen Durchgangskanal 6 miteinander verbunden.

Das Gehäuse 2 weist eine Auslassöffnung 7 auf, die in einen Auslassstutzen 8 mündet. Der Auslassstutzen 8 steht etwas über das Gehäuse 2 vor, so dass beispielsweise ein Schlauch oder dergleichen aufgeschoben werden kann.

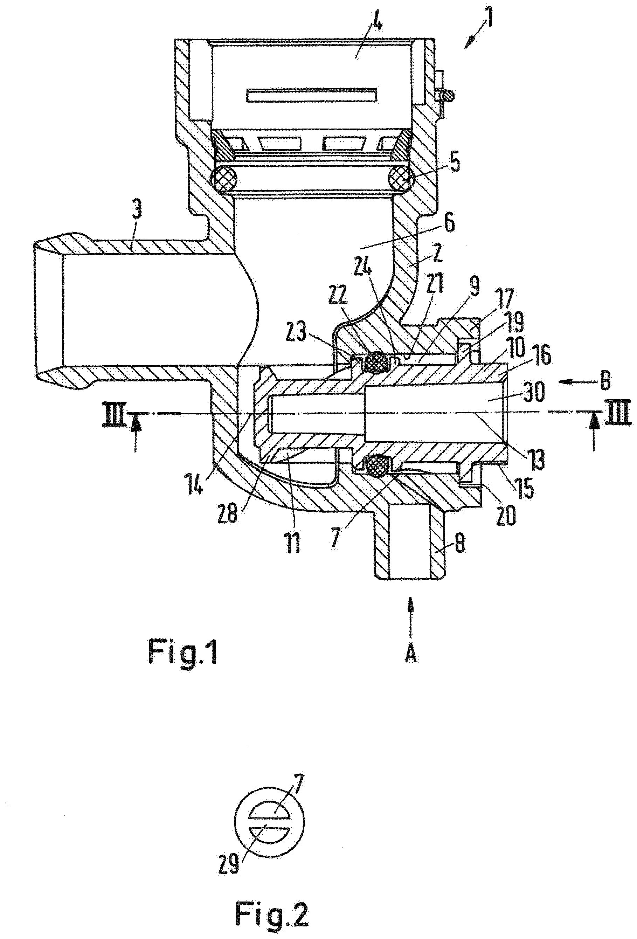

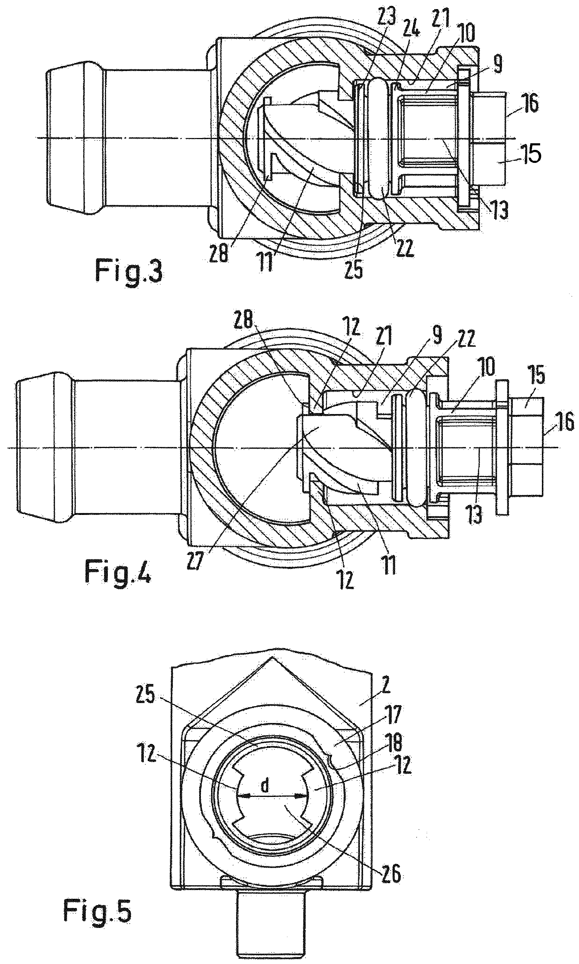

Das Gehäuse 2 weist einen Verschlusselementkanal 9 auf, in dem ein Verschlusselement 10 angeordnet ist. Das Verschlusselement 10 ist in einer ersten Position, die in den Fig. 1 und 3 dargestellt ist, festlegbar. In dieser Position sperrt das Verschlusselement 10 eine Verbindung zwischen der Auslassöffnung 7 und dem Durchgangskanal 6. Das Verschlusselement 10 ist in eine zweite Position verlagerbar, in der es eine Verbindung zwischen dem Durchgangskanal 6 und der Auslassöffnung 7 freigibt, also die Auslassöffnung 7 mit dem Durchgangskanal 6 verbunden ist.

Das Verschlusselement 10 weist mindestens einen, im vorliegenden Fall aber mehrere schraubenlinienförmig geführte Stege 11 auf. Die Stege 11 verlaufen parallel zueinander. Das Gehäuse 2 weist eine Ausformung in Gestalt von einander gegenüberliegenden Vorsprüngen 12 auf, die mit den Stegen 11 zusammenwirken. Die Stege 11 liegen jeweils an den Vorsprüngen 12 an. Dementsprechend ist eine Verlagerung des Verschlusselements 9 gegenüber dem Gehäuse 2 aus der ersten Position in die zweite Position oder umgekehrt nur dann möglich, wenn das Verschlusselement 10 bei dieser translatorischen Verlagerung gleichzeitig um seine Längsachse 13, die auch mit einer Längsachse 14 des Verschlusselementkanals 9 übereinstimmt, gedreht wird.

Um diese Drehung ohne Schwierigkeiten bewirken zu können, weist das Verschlusselement eine Drehmomentangriffsfläche 15 auf, die im vorliegenden Fall als Außensechskant ausgebildet ist. Die Drehmomentangriffsfläche ist an einem Vorsprung 16 des Verschlusselements 10 angeordnet, der unabhängig von der Stellung des Verschlusselements 10 im Gehäuse 2 aus dem Gehäuse 2 herausragt. Die Drehmomentangriffsfläche 15 ist also auch in der ersten Position des Verschlusselements 9 für einen Monteur ohne weiteres mit einem Werkzeug zugänglich.

Das Verschlusselement 10 und das Gehäuse 2 können miteinander in Rotationsrichtung verrastet werden. Hierzu weist das Gehäuse 2 eine Ringwand 17 auf, in der zwei einander gegenüberliegende Rastnuten 18 ausgebildet sind. Das Verschlusselement 10 weist eine Stufe 19 auf, die radial nach außen weisende Spitzen (nicht dargestellt) aufweist, die in die Rastnuten 18 eintreten können, wenn das Verschlusselement 10 im Verschlusselementkanal 9 verdreht wird. Wenn die Spitzen in die Rastnuten 18 eintreten, dann liegt die Stufe 19 an einer Anlagefläche 20 außen am Gehäuse 2 an, die von der Ringwand 17 umgeben und somit weitgehend vor einer Verschmutzung geschützt ist.

Der Verschlusselementkanal 9 weist eine Umfangswand 21 auf. Das Verschlusselement 10 weist eine Ringdichtung 22 auf, beispielsweise in Form eines O-Rings, die unabhängig von der Stellung des Verschlusselements 10 im Verschlusselementkanal 9 von innen an der Umfangswand 21 anliegt. Die Ringdichtung 22 verschließt oder sperrt also in der in Fig. 3 dargestellten ersten Position eine Verbindung zwischen dem Durchgangskanal 6 und der Auslassöffnung 7. Gleichzeitig dichtet die Ringdichtung 22 den Durchgangskanal 6 in diesem Bereich nach außen ab. In der in Fig. 4 dargestellten zweiten Position des Verschlusselements 10 dichtet die Ringdichtung 22 nur nach außen ab, gibt aber eine Verbindung zwischen dem Durchgangskanal 6 und der Auslassöffnung 7 frei.

Die Ringdichtung 22 ist am Verschlusselement 10 zwischen zwei umlaufenden Vorsprüngen 23, 24 gehalten. Die Ringdichtung 22 kann sich auf dem Verschlusselement 10 parallel zur Längsachse 13 also nur beschränkt oder praktisch gar nicht bewegen, so dass die Position der Ringdichtung 22 im Verschlusselementkanal 9 durch die Position des Verschlusselements 10 bestimmt wird.

Der Verschlusselementkanal 9 weist eine Endstirnwand 25 auf, an der auch die beiden Vorsprünge 12 angeordnet sind. Diese Endstirnwand 25 weist eine Öffnung 26 auf, durch die das Verschlusselement mit einem Abschnitt 27 geringeren Durchmessers hindurchragt. An dem Abschnitt 27 sind die schraubenlinienförmig geführten Stege 11 angeordnet. Somit verbleibt zwischen dem Umfang der Öffnung 26 und dem Abschnitt 27 aufgrund des verringerten Durchmessers immer ein ausreichender Raum, durch den in der zweiten Position des Verschlusselements 10 Flüssigkeit aus dem Durchgangskanal 6 in die Auslassöffnung 7 abfließen kann.

Das Verschlusselement 10 weist an seinem in das Gehäuse 2 hineinragenden Ende eine Querschnittsvergrößerung 28 auf, die größer ist als ein kleinster Durchmesser d der Öffnung 26. Die Querschnittsvergrößerung 28 ist also als Verliersicherung ausgebildet, so dass das Verschlusselement verliersicher im Gehäuse 2 gehalten ist.

Wie man in Fig. 2 erkennen kann, ist in der Auslassöffnung 7 eine Brücke 29 vorgesehen. Die Brücke 29 verläuft parallel zur Längsachse 14 des Auslasskanals 9 und schließt bündig mit der Umfangswand 21 ab. Die Brücke 29 bildet eine Stütze für die Ringdichtung 22, wenn sich die Ringdichtung 22 über die Auslassöffnung 7 hinwegbewegt. Dadurch wird die Gefahr einer Beschädigung der Ringdichtung 22 klein gehalten. Das Gehäuse 2 und das Verschlusselement 10 können aus Materialien mit unterschiedlicher Härte gebildet sein. Dadurch wird die Gefahr, dass sich das Verschlusselement 10 und das Gehäuse 2 gegenseitig beschädigen, klein gehalten.

Es ist aber auch möglich, das Verschlusselement 10 und das Gehäuse 2 mit gleicher Härte und auch aus den gleichen Materialien zu bilden.

Das Verschlusselement 10 weist, wie man in Fig. 1 erkennen kann, einen Längskanal 30 auf, der an seinem in das Gehäuse 2 hineinragenden Ende geschlossen ist. Der Längskanal vermindert das Gewicht des Verschlusselements 10.

## Patentansprüche

1. Leitungsverbinder (1) mit einem Gehäuse (2), das eine erste Anschlussgeometrie (3), die mit einer Fluidleitung verbindbar ist, und eine zweite Anschlussgeometrie (4), die mit einem Gegenelement verbindbar ist, aufweist, wobei die erste Anschlussgeometrie (3) und die zweite Anschlussgeometrie (4) durch einen Durchgangskanal (6) im Gehäuse (2) verbunden sind und das Gehäuse (2) eine Auslassöffnung (7) aufweist und ein Verschlusselement (10) vorgesehen ist, wobei das Verschlusselement (10) in einer ersten Position festlegbar ist, in der eine Verbindung zwischen der Auslassöffnung (7) und dem Durchgangskanal (6) gesperrt ist, und das Verschlusselement (10) in eine zweite Position verlagerbar ist, in der die Auslassöffnung (7) mit dem Durchgangskanal (6) verbunden ist, und wobei von den Teilen Verschlusselement (10) und Gehäuse (2) das eine mindestens einen schraubenlinienförmig geführten Steg (11) und das andere eine Ausformung (12), die mit dem Steg (11) zusammenwirkt, aufweist, **dadurch gekennzeichnet, dass** das Verschlusselement (10) und das Gehäuse (2) in der ersten Position eine Rastverbindung (18) miteinander aufweisen.

2. Leitungsverbinder nach Anspruch 1, **dadurch gekennzeichnet, dass** das Verschlusselement (10) eine Drehmomentangriffsfläche (15) aufweist.

3. Leitungsverbinder nach Anspruch 2, **dadurch gekennzeichnet, dass** die Drehmomentangriffsfläche (15) an einem Vorsprung (16) angeordnet ist, der unabhängig von der Stellung des Verschlusselements (10) im Gehäuse (2) aus dem Gehäuse (2) herausragt.

4. Leitungsverbinder nach einem der Ansprüche 1 bis 3, **dadurch gekennzeichnet, dass** die Rastverbindung (18) in Rotationsrichtung wirkt.

5. Leitungsverbinder nach einem der Ansprüche 1 bis 4, **dadurch gekennzeichnet, dass** das Verschlusselement (10) einen Längskanal (30) aufweist, der an einem Ende geschlossen ist.

6. Leitungsverbinder nach einem der Ansprüche 1 bis 5, **dadurch gekennzeichnet, dass** das Verschlusselement (10) in einem Verschlusselementkanal (9) angeordnet ist, der eine Umfangswand (21) aufweist, wobei das Verschlusselement (10) eine Ringdichtung (22) aufweist, die von innen an der Umfangswand (21) anliegt.

7. Leitungsverbinder nach Anspruch 6, **dadurch gekennzeichnet, dass** die Auslassöffnung (7) in den Verschlusselementkanal (9) mündet und eine parallel zur Längsachse des Verschlusselementkanals (9) verlaufende Brücke (29) vorgesehen ist, die bündig mit der Umfangswand (21) abschließt und die Auslassöffnung (7) durchsetzt.

8. Leitungsverbinder nach Anspruch 7, **dadurch gekennzeichnet, dass** das Verschlusselement (10) in der ersten Position mit einer Stufe (19) an einer Anlagefläche (20) von einer Ringwand (17) umgeben ist.

9. Leitungsverbinder nach Anspruch 8, **dadurch gekennzeichnet, dass** die Anlagefläche (20) von einer Ringwand (17) umgeben ist.

10. Leitungsverbinder nach einem der Ansprüche 6 bis 9, **dadurch gekennzeichnet, dass** der Verschlusselementkanal (9) eine Endstirnwand (25) aufweist und das Verschlusselement (10) mit einem Abschnitt (27) durch eine Öffnung (26) in der Endstirnwand (25) hindurchragt, wobei der Abschnitt (27) einen geringeren Querschnitt als eine Größtabmessung der Öffnung (26) aufweist.

11. Leitungsverbinder nach Anspruch 10, **dadurch gekennzeichnet, dass** das Verschlusselement (10) an seinem in das Gehäuse (2) hineinragenden Ende eine Querschnittvergrößerung (28) aufweist, die größer ist als ein kleinster Durchmesser (d) der Öffnung (26).

12. Leitungsverbinder nach einem der Ansprüche 1 bis 11, **dadurch gekennzeichnet, dass** das Gehäuse (2) zumindest in einem Berührungsbereich mit dem Verschlusselement (10) aus einem ersten Material und das Verschlusselement (10) zumindest im Berührungsbereich aus einem zweiten Material gebildet ist, wobei das erste Material eine andere Härte als das zweite Material aufweist.

13. Leitungsverbinder nach einem der Ansprüche 1 bis 12, **dadurch gekennzeichnet, dass** das Gehäuse (2) einen Auslassstutzen (8) aufweist, in den die Auslassöffnung (7) mündet.

## Claims

1. Conduit connector (1) having a housing (2) which has a first terminal geometry (3) which can be connected with a fluid conduit, and a second terminal geometry (4) which can be connected with a counter element, wherein the first terminal geometry (3) and the second terminal geometry (4) are connected by a through channel (6) in the housing (2) and the housing (2) has an outlet opening (7) and a closing element (10) is provided, wherein the closing element (10) can be fixed in a first position, in which a connection between the outlet opening (7) and the through channel (6) is blocked, and the closing element (10) can be moved into a second position, in which the outlet opening (7) is connected with the through channel (6), and wherein of the parts closing element (10) and housing (2) one has at least one helically guided web (11) and the other has a formation (12) which interacts with the web (11), **characterised in that** the closing element (10) and the housing (2) in the first position have a latching connection (18) with one another.

2. Conduit connector according to claim 1, **characterised in that** the closing element (10) has a rotation torque application surface (15).

3. Conduit connector according to claim 2, **characterised in that** the rotation torque application surface (15) is disposed on a protrusion (16) which protrudes out of the housing (2) independently of the position of the closing element (10) in the housing (2).

4. Conduit connector according to any of claims 1 to 3, **characterised in that** the latching connection (18) acts in rotational direction.

5. Conduit connector according to any of claims 1 to 4, **characterised in that** the closing element (10) has a longitudinal channel (30) which is closed at one end.

6. Conduit connector according to any of claims 1 to 5, **characterised in that** the closing element (10) is disposed in a closing element channel (9) which has a surrounding wall (21), wherein the closing element (10) has a ring seal (22) which abuts on the surrounding wall (21) from the inside.

7. Conduit connector according to claim 6, **characterised in that** the outlet opening (7) opens into the closing element channel (9) and a bridge (29) is provided extending parallel to the longitudinal axis of the closing element channel (9), which bridge ends flush with the surrounding wall (21) and penetrates through the outlet opening (7).

8. Conduit connector according to claim 7, **characterised in that** the closing element (10) in the first position having a step (19) on an abutment surface (20) is surrounded by a ring wall (17).

9. Conduit connector according to claim 8, **characterised in that** the abutment surface (20) is surrounded by a ring wall (17).

10. Conduit connector according to any of claims 6 to 9, **characterised in that** the connecting element channel (9) has an end face wall (25) and the closing element (10) protrudes with a portion (27) through an opening (26) in the end face wall (25), wherein the portion (27) has a smaller cross-section than a maximum dimension of the opening (26).

11. Conduit connector according to claim 10, **characterised in that** the closing element (10) has on its end protruding into the housing (2) a cross-section enlargement (28) which is greater than a smallest diameter (d) of the opening (26).

12. Conduit connector according to any of claims 1 to 11, **characterised in that** the housing (2) at least in a contact region with the closing element (10) is formed from a first material and the closing element (10) at least in the contact region is formed from a second material, wherein the first material has a different hardness than the first material.

13. Conduit connector according to any of claims 1 to 12, **characterised in that** the housing (2) has an outlet connection piece (8) into which the outlet opening (7) opens.

## Revendications

1. Raccord de conduites (1) avec un boîtier (2), qui présente une première géométrie de raccordement (3), qui peut être reliée à une conduite de fluide, et une seconde géométrie de raccordement (4), qui peut être reliée à un élément complémentaire, dans lequel la première géométrie de raccordement (3) et la seconde géométrie de raccordement (4) sont reliées par un canal de passage (6) dans le boîtier (2) et le boîtier (2) présente un orifice de sortie (7) et un élément de fermeture (10) est prévu, dans lequel l'élément de fermeture (10) peut être fixé dans une première position, dans laquelle une liaison entre l'orifice de sortie (7) et le canal de passage (6) est bloquée, et l'élément de fermeture (10) peut être déplacé dans une seconde position, dans laquelle l'orifice de sortie (7) est relié au canal de passage (6), et dans lequel parmi les pièces élément de fermeture (10) et boîtier (2), l'un présente au moins un élément jointif (11) guidé de façon hélicoïdale et l'autre une partie conformée (12), qui coopère avec l'élément jointif (11), **caractérisé en ce que** l'élément de fermeture (10) et le boîtier (2) présentent dans la première position une liaison par encliquetage (18) l'un avec l'autre.

2. Raccord de conduites selon la revendication 1, **caractérisé en ce que** l'élément de fermeture (10) présente une surface d'application de couple (15).

3. Raccord de conduites selon la revendication 2, **caractérisé en ce que** la surface d'application de couple (15) est disposée sur une partie saillante (16), qui fait saillie du boîtier (2) indépendamment de la position de l'élément de fermeture (10) dans le boîtier (2).

4. Raccord de conduites selon l'une quelconque des revendications 1 à 3, **caractérisé en ce que** la liaison par encliquetage (18) agit dans le sens de rotation.

5. Raccord de conduites selon l'une quelconque des revendications 1 à 4, **caractérisé en ce que** l'élément de fermeture (10) présente un canal longitudinal (30), qui est fermé à une extrémité.

6. Raccord de conduites selon l'une quelconque des revendications 1 à 5, **caractérisé en ce que** l'élément de fermeture (10) est disposé dans un canal d'élément de fermeture (9), qui présente une paroi périphérique (21), dans lequel l'élément de fermeture (10) présente un joint annulaire (22), qui s'applique de l'intérieur contre la paroi périphérique (21).

7. Raccord de conduites selon la revendication 6, **caractérisé en ce que** l'orifice de sortie (7) débouche dans le canal d'élément de fermeture (9) et un pont (29) s'étendant parallèlement à l'axe longitudinal du canal d'élément de fermeture (9) est prévu, qui se termine à fleur avec la paroi périphérique (21) et traverse l'orifice de sortie (7).

8. Raccord de conduites selon la revendication 7, **caractérisé en ce que** l'élément de fermeture (10) est entouré dans la première position par une paroi annulaire (17) avec un étage (19) contre une surface d'appui (20).

9. Raccord de conduites selon la revendication 8, **caractérisé en ce que** la surface d'appui (20) est entourée par une paroi annulaire (17).

10. Raccord de conduites selon l'une quelconque des revendications 6 à 9, **caractérisé en ce que** le canal d'élément de fermeture (9) présente une paroi frontale d'extrémité (25) et l'élément de fermeture (10) fait saillie avec une partie (27) à travers une ouverture (26) dans la paroi frontale d'extrémité (25), dans lequel la partie (27) présente une section transversale plus petite qu'une dimension la plus grande de l'orifice (26).

11. Raccord de conduites selon la revendication 10, **caractérisé en ce que** l'élément de fermeture (10) présente à son extrémité faisant saillie dans le boîtier (2) une augmentation de section transversale (28), qui est plus grande qu'un diamètre le plus petit (d) de l'orifice (26).

12. Raccord de conduites selon l'une quelconque des revendications 1 à 11, **caractérisé en ce que** le boîtier (2) est formé au moins dans une zone de contact avec l'élément de fermeture (10) d'un premier matériau et l'élément de fermeture (10) au moins dans la zone de contact d'un second matériau, dans lequel le premier matériau présente une dureté différente de celle du second matériau.

13. Raccord de conduites selon l'une quelconque des revendications 1 à 12, **caractérisé en ce que** le boîtier (2) présente une tubulure de sortie (8), dans laquelle l'orifice de sortie (7) débouche.
